# EUROPÄISCHE PATENTSCHRIFT

(11) **EP 1 070 651 B1**
(45) Veröffentlichungstag und Bekanntmachung des Hinweises auf die Patenterteilung: **22.12.2004**
(21) Anmeldenummer: 00110750.7
(22) Anmeldetag: 19.05.2000
(51) Int. Cl.: B62D 1/184

(54) **Verstellvorrichtung für ein Mantelrohr einer Lenkungsanlage eines Kraftfahrzeugs**
Adjusting device for a steering column jacket of a steering apparatus of a motor vehicle
Dispositif de réglage pour un tube de colonne de direction d'un dispositif de direction de véhicule automobile

(30) Priorität: 17.07.1999 DE 19933678
(43) Veröffentlichungstag der Anmeldung: 24.01.2001
(73) Patentinhaber: DaimlerChrysler AG, 70567 Stuttgart (DE)
(72) Erfinder: Hebenstreit, Axel, 70569 Stuttgart (DE); Meyer, Thorsten, 71134 Aidlingen (DE); Peitsmeier, Karl, 71686 Remseck-Aldingen (DE); Schremmer, Gottfried, 71732 Tamm (DE)

(56) Entgegenhaltungen:
- EP-A- 0 673 825
- EP-A- 0 802 104
- US-A- 2 910 887

## Beschreibung

Die Erfindung betrifft eine Verstellvorrichtung für ein Mantelrohr einer Lenkungsanlage eines Kraftfahrzeugs mit einem schwenkbeweglich gelagerten Klemmhebel, der eine Längs- oder Höhenverlagerbarkeit des Mantelrohres in einer gelösten Position freigibt oder in einer arretierten Position blockiert, sowie mit einer Betätigungseinrichtung zum manuellen Lösen oder Arretieren des Klemmhebels, die eine im fahrzeugfest montierten Zustand von einer Fahrersitzposition aus zugängliche Griffanordnung aufweist.

Eine solche Verstellvorrichtung für ein Mantelrohr einer Lenkungsanlage eines Personenkraftwagens ist allgemein bekannt (siehe zum Beispiel EP0802104A) . Um ein Lenkrad einer Fahrerposition des Personenkraftwagens sowohl in seiner Höhe als auch in seiner Tiefe relativ zu einer Armaturentafel des Fahrzeuginnenraumes und relativ zu einer Sitzposition des Fahrers verändern zu können, ist das Mantelrohr der Lenkungsanlage mittels der Verstellvorrichtung fahrzeugfest gelagert. Die Verstellvorrichtung weist einen Klemmbolzen auf, der Lamellenpakete auf beiden Seiten des Mantelrohres durchsetzt, die alternierend mit in Längs- oder Hochrichtung verlaufenden Langlöchern versehen sind. Auf dem Klemmbolzen, der die Langlöcher durchsetzt, ist ein Klemmechanismus angeordnet, der durch Schwenkbewegungen des Klemmbolzens um seine Längsachse die Lamellenpakete gegeneinander preßt oder freigibt. Die flexiblen Lamellen werden durch den klemmechanismus an die seitliche feste Lamelle gedrückt, die sich selbst an der ortsfesten Konsole abstützt. Zur Verschwenkung des Klemmbolzens ist an einem Ende ein Klemmhebel festgelegt, der mit einer manuellen Betätigungseinrichtung in Verbindung steht. Die manuelle Betätigungseinrichtung ist von der Fahrerposition aus zugänglich, so daß durch eine manuelle Bedienung der Betätigungseinrichtung durch den Fahrer der Klemmhebel gelöst, anschließend das Lenkrad einschließlich Mantelrohr in die gewünschte Position verstellt und schließlich der Klemmhebel wieder arretiert werden kann.

Aufgabe der Erfindung ist es, eine Verstellvorrichtung der eingangs genannten Art zu schaffen, die eine einfache, sichere und komfortable Funktion gewährleistet.

Diese Aufgabe wird dadurch gelöst, daß an dem eine Führungsschienenanordnung in Mantelrohrlängsrichtung ausgerichtet angeordnet ist, an der ein durch die Griffanordnung beweglicher Stellschlitten verschiebbar gehalten ist, der mit dem Klemmhebel in Verbindung steht. Da der Stellschlitten an der mantelrohrfesten Führungsschienenanordnung gehalten ist, werden alle beim Lösen oder Arretieren des Klemmhebels sowie bei der Verstellung des Mantelrohres auftretenden Kräfte im Mantelrohr aufgenommen, so daß sich eine gleichbleibende, leichtgängige und sichere Funktion des Lösens und Arretierens des Klemmhebels ergibt. Auch die von der Fahrerposition aus bedienbare Griffanordnung ist äußerst komfortabel bedienbar, da sie lediglich die lineare Verstellung des Stellschlittens durchführt.

In Ausgestaltung der Erfindung sind die Führung des Stellschlittens auf der Führungsschienenanordnung, die Schwenklagerung des Klemmhebels und eine Lagerung der Griffanordnung in ihren Führungs- und Lagerreibungskräften derart aufeinander abgestimmt, daß bei einer Längsverstellung des Mantelrohres die mantelrohrfeste Führungsschienenanordnung gegenüber dem durch den Klemmhebel und die Griffanordnung ortsfest gehaltenen Stellschlitten verschiebbar ist. Dadurch verbleibt die Griffanordnung bei einer Längsverstellung des Mantelrohres ortsfest, so daß der Fahrer nach der gewünschten Verstellung des Lenkrades und des Mantelrohres die Griffanordnung in derselben Position wieder auffindet, in der er sie losgelassen hatte.

In weiterer Ausgestaltung der Erfindung steht der Stellschlitten mit dem Klemmhebel mittels einer Kupplungseinheit in Verbindung, die die translatorische Beweglichkeit des Stellschlittens gegenüber der rotatorischen Beweglichkeit des Klemmhebels ausgleicht. Vorzugsweise weist die Kupplungseinheit einen Führungsbolzen auf, der in einem Langloch des Klemmhebels positioniert ist. Das Langloch des Klemmhebels ist in seiner Länge derart bemessen, daß der mit dem Führungsbolzen zumindest im wesentlichen starr verbundene Stellschlitten seine Verschiebebewegungen zwischen den Endpositionen durchführen kann, ohne daß Verspannungen relativ zum Klemmhebel auftreten.

In weiterer Ausgestaltung der Erfindung ist eine Toleranzausgleichseinheit in der Verbindung zwischen Stellschlitten und Klemmhebel oder Stellschlitten und Griffanordnung integriert. Dadurch wird gewährleistet, daß auch Montage- und Herstellungstoleranzen der einzelnen Bauteile die sichere und leichtgängige Funktion der Verstellvorrichtung nicht beeinträchtigen. Die von der Fahrerposition aus zugängliche Griffanordnung befindet sich zudem unabhängig von den vorhandenen Toleranzen immer in der gleichen Ruheposition.

In weiterer Ausgestaltung der Erfindung ist die Toleranzausgleichseinheit als zwischen dem Klemmhebel und dem Stellschlitten vorgesehener Einstellmechanismus gestaltet. Dadurch ist es möglich, eine exakte Justierung der Verstellvorrichtung abhängig von den jeweils vorhandenen Toleranzen vorzunehmen.

In weiterer Ausgestaltung der Erfindung weist der Einstellmechanismus eine mit einer Verzahnung versehene Einstellstange einerseits und einen auf der Einstellstange verschiebbaren Rastschlitten andererseits auf, der ein mit einer korrespondierenden Verzahnung versehenes Sperrglied aufweist, das manuell in eine gelöste Stellung überführbar ist und derart federbeaufschlagt ist, daß es selbsttätig in seine Sperrposition rückstellbar ist. Dadurch wird eine besonders einfache Justierung der Verstellvorrichtung gewährleistet.
Die erfindungsgemäße Aufgabe wird auch dadurch gelöst, daß die Griffanordnung in einer fahrzeugfest positionierten Mantelrohrmanschette mittels einer Lagerung verschiebbar gelagert ist, die derart spielbehaftete Lagerelemente aufweist, daß die Griffanordnung Ausgleichsbewegungen um wenigstens eine quer zur Schieberichtung verlaufende Achse durchführen kann. Dadurch wird eine leichtgängige und funktionssichere Bedienung der Griffanordnung gewährleistet. Verspannungen zwischen der Lagerung in der Mantelrohrmanschette und der Griffanordnung werden vermieden, so daß eine geräuscharme Bedienung der Griffanordnung ermöglicht wird. Die im wesentlichen translatorische Verschiebebewegung der Griffanordnung schafft eine ergonomisch günstige Bedienung durch den Fahrer des Kraftfahrzeugs.

In weiterer Ausgestaltung der Erfindung weist die Griffanordnung einen längserstreckten Griffarm auf, der an einem Ende an den Stellschlitten gekoppelt ist und am anderen Ende ein von der Fahrersitzsposition aus zugängliches Griffelement aufweist. Der Griffarm ist vorzugsweise aus Kunststoff hergestellt.

In weiterer Ausgestaltung der Erfindung ist die Kopplung des Griffarmes an den Stellschlitten als lösbare Verriegelung gestaltet. Dadurch wird eine sichere Anbindung der Griffanordnung an den Stellschlitten geschaffen, die ein unbeabsichtigtes Lösen des Griffarmes vom Stellschlitten verhindert.

In weiterer Ausgestaltung der Erfindung ist der Griffarm radial durch eine zentrale Aussparung einer als Lagerelement dienenden Lagerrolle hindurchgeführt, die um eine horizontale, quer zur Schieberichtung des Griffarmes verlaufende Drehachse drehbeweglich gelagert ist. In weiterer Ausgestaltung ist die Aussparung der Lagerrolle, durch die der Griffarm hindurchragt, sowohl in ihrer Breite als auch in ihrer Höhe größer gestaltet als die Außenabmessungen des Griffarmes. Dadurch wird das Ausgleichsspiel für den Griffarm geschaffen, der die leichtgängige und funktionssichere Betätigung der Griffanordnung mittels des Griffelementes ermöglicht.
In weiterer Ausgestaltung der Erfindung sind in der Lagerrolle Federelemente integriert, die den Griffarm unter Vorspannung in einer zentralen Führungslage halten. Ein Klappern oder eine anders gestaltete Geräuschbildung werden durch diese Ausgestaltung vermieden oder zumindest reduziert.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt in einer Seitenansicht ein Mantelrohr einer Lenkungsanlage eines Personenkraftwagens mit einer Ausführungsform einer erfindungsgemäßen Verstellvorrichtung,
- Fig. 2: das Mantelrohr mit der Verstellvorrichtung nach Fig. 1 aus einer perspektivischen Darstellung von unten,
- Fig. 3: in vergrößerter perspektivischer Darstellung eine in einer Mantelrohrmanschette gelagerte Griffanordnung der Verstellvorrichtung nach den Fig. 1 und 2,
- Fig. 4: in perspektivischer Darstellung die Griffanordnung nach Fig. 3, jedoch ohne die Darstellung der Mantelrohrmanschette,
- Fig. 5: die Griffanordnung nach Fig. 4 unter weiterer Weglassung eines Teiles seiner Lagerung,
- Fig. 6: in vergrößerter Schnittdarstellung einen Querschnitt durch die Lagerung der Griffanordnung entlang der Schnittlinie VI-VI in Fig. 1 und

- Fig. 7: in vergrößerter Schnittdarstellung einen Längsschnitt durch eine Toleranzausgleichseinheit der Verstellvorrichtung nach Fig. 1.

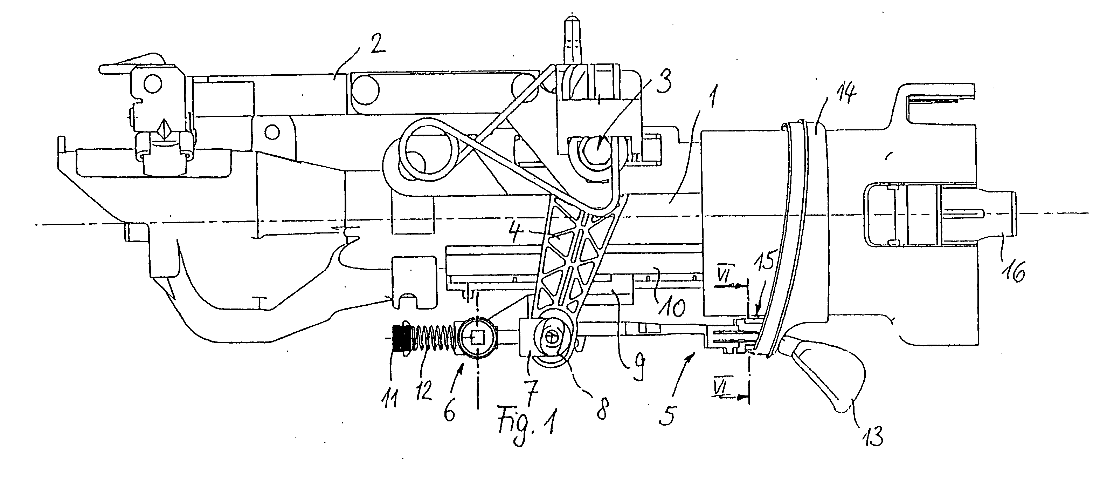

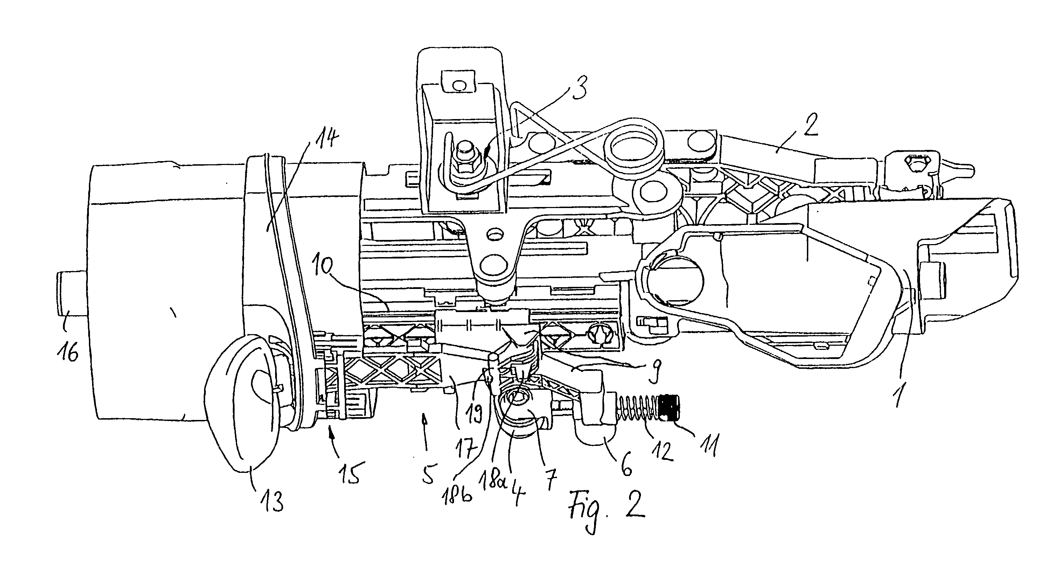

Ein Mantelrohr nach den Fig. 1 und 2 ist Teil einer Lenkungsanlage für einen Personenkraftwagen. Das Mantelrohr 1 ist an einer fahrzeugfesten Konsole 2 sowohl in seiner Längsrichtung als auch in seiner Höhe verstellbar. Eine in dem Mantelrohr 1 drehbar gelagert Lenksäule trägt an einem im montierten Zustand in einen Fahrerbereich eines Innenraumes der Personenkraftwagens ragenden Stirnende 16 ein Lenkrad. Durch eine entsprechende Längs- und/oder Höhenverstellung des Mantelrohres 1 ist das Lenkrad relativ zu einer Sitzposition des Fahrers des Personenkraftwagens sowohl in der Höhe als auch in der Tiefe, d.h. im Abstand zu einer Armaturentafel des Innenraumes verstellbar.

Zur Verstellung des Mantelrohres 1 in Längs- und/oder Höhenrichtung sind in grundsätzlich bekannter Weise zu beiden Seiten des Mantelrohres 1 nicht näher bezeichnete Lamellenpakete vorgesehen, die alternierend in Längs- und Hochrichtung verlaufende Langlöcher aufweisen. Quer zur Längsrichtung des Mantelrohres werden die Langlöcher der Lamellenpakete durch einen Klemmbolzen 3 durchsetzt, der in grundsätzlich bekannter Weise mit einem Klemmechanismus zum Klemmen oder Freigeben der Lamellenpakete versehen ist. Der Klemmbolzen 3 ist um seine Rotationsachse mittels eines seitlich des Mantelrohres 1 angeordneten Klemmhebels 4 verschwenkbar, wodurch eine Klemmung oder eine Freigabe der Lamellenpakete erzielt wird. Bei einer Klemmung der Lamellenpakete ist eine Verstellung des Mantelrohres 1 relativ zu der fahrzeugfesten Konsole blockiert. Bei entsprechender Verschwenkung des Klemmhebels für eine Freigabe der Lamellenpakete ist eine Verlagerung des Mantelrohres 1 in Längs- und/oder Höhenrichtung möglich.

Der Klemmhebel 4 ist durch eine nachfolgend näher beschriebene Verstellvorrichtung verschwenkbar, die manuell von der Sitzposition des Fahrers aus bedienbar ist.

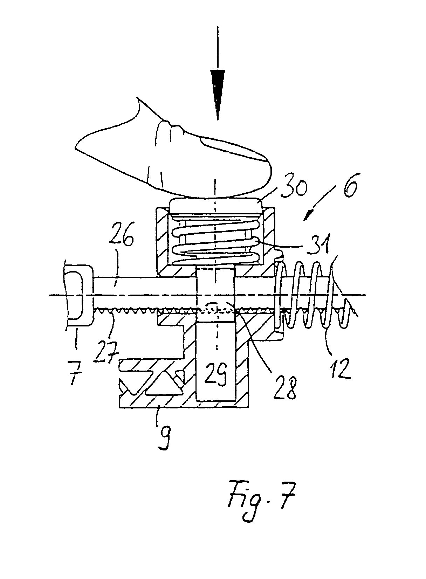

Die Verstellvorrichtung ist über eine Kupplungseinheit 7, 8 und eine Toleranzausgleichseinheit 6, 11, 12 mit einem Stellschlitten 9 verbunden, der in Längsrichtung des Mantelrohres 1 auf einer mantelrohrfest angeordneten Führungsschienenanordnung 10 verschiebbar gehalten ist. Um die während der Schwenkbewegung des Klemmhebels 4 gegenüber der translatorischen Verschiebebewegung des Stellschlittens 9 zwischen den gegenüberliegenden Endpositionen des Klemmhebels 4 auftretenden Höhendifferenzen auszugleichen, weist die Kupplungseinheit 7, 8 am Verbindungspunkt mit dem Klemmhebel 4 ein Langloch 8 im Klemmhebel 4 auf, durch den ein Verbindungsbolzen einer Haltegabel 7 der Kupplungseinheit 7, 8 hindurchragt. Die Haltegabel 7 ist starr mit einer Einstellstange 26 (Fig. 7) verbunden, die über die Toleranzausgleichseinheit 6, 11, 12 starr mit einem Verbindungsarm des Stellschlittens 9 verbunden ist. Der Verbindungsarm ist einstükkig am Stellschlitten 9 angeformt.

Wie insbesondere anhand der Fig. 2 erkennbar ist, greift an dem Stellschlitten 9 eine Griffanordnung 5 an, die auf der der Toleranzaus^{g}leichseinheit 6, 11, 12 gegenüberliegenden Seite von dem Stellschlitten 9 abragt. Die Griffanordnung 5 ragt somit längs des Mantelrohres 1 zum Fahrzeuginnenraum hin und damit zum Lenkrad der Lenkungsanlage hin ab. An ihrem freien Ende trägt die Griffanordnung 5 ein Griffelement in Form einer Griffschale 13, die auf der Seite des Fahrzeuginnenraumes aus einer Mantelrohrmanschette 14 herausragt. Die Griffanordnung 5 ist mittels einer nachfolgend näher beschriebenen Lagerung 15 in der Mantelrohrmanschette 14 längsverschiebbar sowie mit Spielausgleich in quer zur Längsverschiebbarkeit verlaufenden Achsen beweglich gelagert.

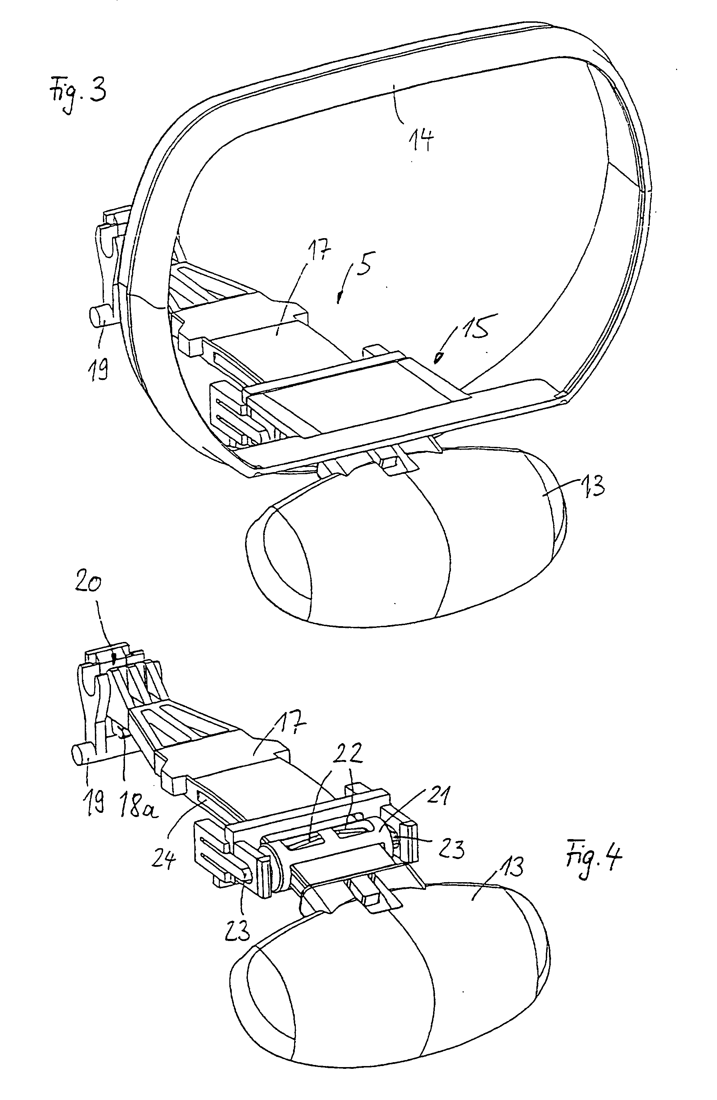

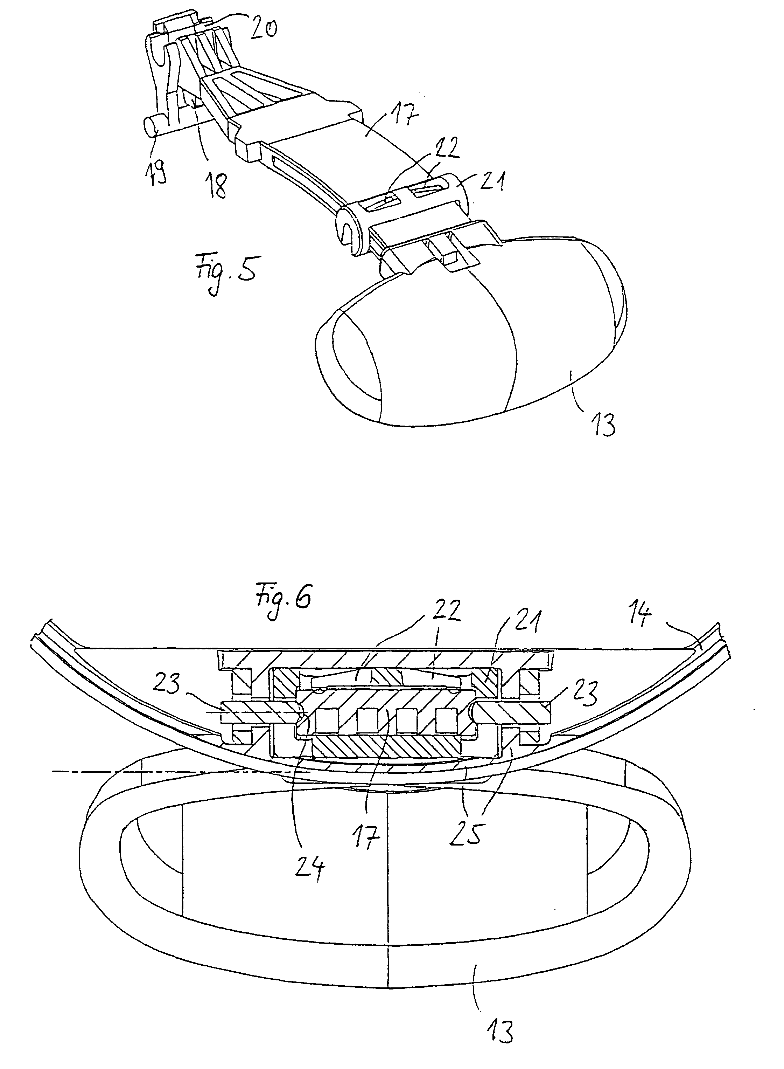

Die Griffanordnung 5 weist einen Griffarm 17 auf, der aus Kunststoff hergestellt ist. Der Griffarm 17 trägt an seinem einen Ende die Griffschale 13. Am gegenüberliegenden Ende ist er mit einer Halterung 18 bis 20 versehen, (Fig. 3 bis 5), die mit einem Bügelbereich des Stellschlittens 9 lösbar verbindbar ist. Die Halterung 18 bis 20 weist eine Aufnahme 20 auf, in die ein Bügelbereich des Stellschlittens 9 eintaucht. Die formschlüssige Verbindung zwischen der Aufnahme 20, d.h. dem Griffarm 17 und dem Bügelbereich des Stellschlittens 9 wird durch eine Schwenkhükenanerdnuna 19 hergestellt, die am Griffarm 17 angelenkt ist. Die Schwenkhakenanordnung 19 ist mit Hilfe von an einer Unterseite des Griffarmes 17 angeformten Raststellen 18a, 18b sowohl in der Freigabeposition als auch in der Arretierposition verrastbar. In der Arretierposition umgreifen die gabelförmigen Schenkelabschnitte der Scharnierhakenanordnung 19 den Bügeibereich des Stellschlittens 9 formschlüssig.

Der Griffarm 17 ist in der Lagerung 15 der Mantelrohrmanschette 14 verschiebbar gelagert. Dazu durchsetzt der als flaches, längserstrecktes Profil gestaltete Griffarm (Fig. 4) eine Lagerrolle 21, die in einer Lagerhülse 25 angeordnet ist. Die Lagerhülse 25 ist einstückiger Teil der Mantelrohrmanschette 14. Die Lagerung 15 weist zudem einen Lagerdeckel auf, der mit seitlichen Federzungen 23 versehen ist. Die seitlichen Federzungen 23 weisen zum Griffarm 17 hin abragende Zapfen auf, auf denen die Lagerrolle 21 gehalten ist und die den Griffarm 17 an seinen gegenüberliegenden Seitenkanten im Bereich von seitlichen Längsnuten 24 stützen. Die Lagerrolle 21 weist zudem von oben auf den Griffarm 17 drückende Federzungen 22 auf, die den Griffarm 17 gegen den Boden der Lagerrolle 21 drücken. Die Aussparung der Lagerrolle 21, durch die der Griffarm 17 hindurchragt, erlaubt für die Bewegung des Griffarmes 17 sowohl ein Spiel in Querrichtung als auch in Hochrichtung, wobei das jeweilige Spiel durch die Federelernente 22, 23 vorbelastet ist, um den Griffarm 17 zentral zu führen.

Durch die beschriebene Lagerung 15 der Griffanordnung 5 ist der Griffarm 17 somit sowohl in seiner Schiebeebene um eine entsprechende Hochachse zusätzlich geringfügig schwenkbeweglich, als auch um die Rotationsachse der Lagerrolle 21 um gewisse Beträge kippbeweglich.

Die zwischen dem Klemmhebel 4 und dem Stellschlitten 9 angeordnete Toleranzausgleichseinheit 6, 11, 12 (Fig. 7) weist einen Schlitten auf, der einstückig mit dem Verbindungsarm des Stellschlittens 9 verbunden ist. Der Verbindungsschlitten ist auf der Einstellstange 26 (Fig. 7) gehalten. Um eine formschlüssige Arretierung des Verbindungsschlittens auf der Einstellstange 26 zu ermöglichen, ist die Einstellstange 26 mit einer Verzahnung 27 versehen. In dem Verbindungsschlitten ist ein die Einstellstange 26 kasten- oder ringartig umschließender Rastbügel 28 quer zur Einstellstange 26 linearbeweglich gelagert. Eine der Verzahnung 27 zugeordnete Innenwandung des Rastbügels 28 weist eine korrespondierence Innenverzahnung 29 auf, die im arretierten Zustand in die Verzahnung 27 eingreift und eine direkte Kraftübertragung zwischen Stellschlitten 9 und Kupplungseinheit 7, d.h. Klemmebel 4 schafft. Der Rastbügel 28 ist mit einem Betätigungsknopf 30 verbunden, und durch eine Druckfederanordnung 31 in der in die Verzahnung 27 eingreifenden Arretierposition gehalten. Durch ein manuelles Drücken auf den Betätigungsknopf 30 (Pfeilrichtung in Fig. 7) wird der Rastbügel 28 von der Einstellstange 26 gelöst, so daß eine Justierung zwischen der Position des Stellschlittens 9 und der Position des Klemmhebels 4 erzielbar ist. Dem Verbindungsschlitten ist auf der Einstellstange 26 noch eine Rückstellfederanordnung 12 zugeordnet, die sich an einem endseitigen Halteknopf 11 abstützt, der stirnseitig auf der Einstellstange 26 lösbar festgelegt ist. Zur Festlegung des Halteknopfes 11 auf der Einstellstange 26 ist eine Rastverbindung vorgesehen. Die Rückstellfederanordnung 12 übt auf den Verbindungsschlitten eine Druckbelastung aus, durch die der Verbindungsschlitten zur Haltegabel 7 hin druckbelastet ist.

Um nun abhängig von den Montage- und Herstellungstoleranzen der Verstellvorrichtung sowie des Mantelrohres 1 die gewünschten Positionen zwischen Stellschlitten und Klemmhebel 4 sowie Griffanordnung 5 zu erzielen, wird in einfacher Weise der Rastbügel durch den Betätigungsknopf 30 gelöst und die gewünschte Position des Verbindungsschlittens auf der Einstellstange 26 eingestellt. Dabei muß gewährleistet sein, daß der Stellschlitten 9 sich in beiden Endpositionen des Klemmhebels 4, d.h. sowohl in der ^{g}elösten Freigabeposition als auch in der festgelegten Arretierposition, nach Möglichkeit noch nicht am Endanschlag der Führungsschienenanordnung 10 befindet. Zudem muß die jeweilige Position derart justiert werden, daß der Stellschlitten 9 durch seine entsprechende translatorische Bewegung auch den gesamten Schwenkweg des Klemmhebels 4 mitmachen kann.

Die Lagerkräfte zwischen dem Stellschlitten und der Führungsschienenanordnung 10 einerseits sowie zwischen Kupplungseinheit 7 und Klemmhebel 4 andererseits sowie zwischen Griffanordnung 5 und Klemmhebel 4 sowie zwischen Griffanordnung 5 und Mantelrohrmanschette 14 sind derart aufeinander abgestimmt, daß bei einer Längsverstellung des Mantelrohres 1 der Stellschlitten 9 einschließlich des Klemmhebels 4 wie auch der Toleranzausgleichseinheit 6 und der Griffanordnung 5 ortsfest verbleibt. Die Führungsschienenanordnung 10 des Mantelrohres 1 wird somit bei einer Längsverstellung des Mantelrohres 1 gegenüber dem Stellschlitten 9 verschoben. Dadurch wird gewährleistet, daß der fahrzeugkonsolenfest gelagerte Klemmhebel 4 in seiner jeweils eingestellten Endstellung verbleibt, d.h. daß eine Längsverstellung des Mantelrohres 1 nicht unbeabsichtigt zu einer Klemmung der Lamellenpakete führt.

## Patentansprüche

1. Verstellvorrichtung für ein Mantelrohr (1) einer Lenkungsanlage eines Kraftfahrzeugs mit einem schwenkbeweglich gelagerten Klemmhebel (4), der eine Längs- oder Höhenverlagerbarkeit des Mantelrohres (1) in einer gelösten Position freigibt oder in einer arretierten Position blockiert, sowie mit einer Betätigungseinrichtung zum manuellen Lösen oder Arretieren des Klemmhebels (4), die eine im fahrzeugfest montierten Zustand von einer Fahrersitzposition aus zugängliche Griffanordnung (5) aufweist,
**dadurch gekennzeichnet, daß**
an dem Mantelrohr (1) eine Führungsschienenanordnung (10) in Mantelrohrlängsrichtung ausgerichtet angeordnet ist, an der ein durch die Griffanordnung (5) beweglicher Stellschlitten (9) verschiebbar gehalten ist, der mit dem Klemmhebel (4) in Verbindung steht.

2. Verstellvorrichtung nach Anspruch 1,
**dadurch gekennzeichnet, daß**
die Führung des Stellschlittens (9) auf der Führungsschienenanordnung (10), die Schwenklagerung des Klemmhebels (4) und eine Lagerung (15) der Griffanordnung (5) in ihren Führungs- und Lagerreibungskräften derart aufeinander abgestimmt sind, daß bei einer Längsverstellung des Mantelrohres (1) die mantelrohrfeste Führungsschienenanordnung (10) gegenüber dem durch den Klemmhebel (4) und die Griffanordnung (5) ortsfest gehaltenen Stellschlitten verschiebbar ist.

3. Verstellvorrichtung nach Anspruch 1 oder 2,
**dadurch gekennzeichnet, daß**
der Stellschlitten (9) mit dem Klemmhebel (4) mittels einer Kupplungseinheit (7, 8) in Verbindung steht, die die translatorische Beweglichkeit des Stellschlittens (9) gegenüber der rotatorischen Beweglichkeit des Klemmhebels (4) ausgleicht.

4. Verstellvorrichtung nach Anspruch 1,
**dadurch gekennzeichnet, daß**
eine Toleranzausgleichseinheit (6, 11, 12) in die Verbindung zwischen Stellschlitten (9) und Klemmhebel (4) oder Stellschlitten (9) und Griffanordnung (5) integriert ist.

5. Verstellvorrichtung nach Anspruch 4,
**dadurch gekennzeichnet, daß**
die Toleranzausgleichseinheit (6, 11, 12) als zwischen dem Klemmhebel (4) und dem Stellschlitten (9) vorgesehener Einstellmechanismus (26 bis 31) gestaltet ist.

6. Verstellvorrichtung nach Anspruch 5,
**dadurch gekennzeichnet, daß**
der Einstellmechanismus (26 bis 31) eine mit einer Verzahnung (27) versehene Einstellstange (26) einerseits und einen auf der Einstellstange (26) verschiebbaren Schlitten andererseits aufweist, der ein mit einer korrespondierenden Verzahnung (29) versehenes Sperrglied (28) aufweist, das manuell in eine gelöste Stellung überführbar ist und derart federbeaufschlagt ist, daß es selbsttätig in seine Sperrposition rückstellbar ist.

7. Verstellvorrichtung nach Anspruch 6,
**dadurch gekennzeichnet, daß**
der Schlitten durch eine Rückstellfederanordnung (12) in einer Bewegungsrichtung federbelastet ist.

8. Verstellvorrichtung nach Anspruch 7,
**dadurch gekennzeichnet, daß**
die Rückstellfederanordnung (12) koaxial auf der Einstellstange (26) angeordnet ist.

9. Vorstelleinrichtung nach einem der vorhergehenden Ansprüche,
**dadurch gekennzeichnet, daß**
die Griffanordnung (5) in einer fahrzeugfest positionierten Mantelrohrmanschette (14) mittels einer Lagerung (15) verschiebbar gelagert ist, die derart spielbehaftete Lagerelemente (21 bis 25) aufweist, daß die Griffanordnung (5) Ausgleichsbewegungen um wenigstens eine quer zur Schieberichtung verlaufende Achse durchführen kann.

10. Verstellvorrichtung nach Anspruch 9,
**dadurch gekennzeichnet, daß**
die Griffanordnung (5) einen längserstreckten Griffarm (17) aufweist, der an einem Ende an den Stellschlitten (9) gekoppelt ist und am anderen Ende ein von der Fahrersitzposition aus zugängliches Griffelement (13) aufweist.

11. Verstellvorrichtung nach Anspruch 10,
**dadurch gekennzeichnet, daß**
die Kopplung des Griffarmes (17) an den Stellschlitten (9) als lösbare Verriegelung gestaltet ist.

12. Verstellvorrichtung nach Anspruch 10,
**dadurch gekennzeichnet, daß**
der Griffarm (17) radial durch eine zentrale Aussparung einer als Lagerelement dienenden Lagerrolle (21) hindurchgeführt ist, die um eine horizontale, quer zur Schieberichtung des Griffarmes (17) verlaufende Drehachse kippbeweglich gelagert ist.

13. Verstellvorrichtung nach Anspruch 12,
**dadurch gekennzeichnet, daß**
die Aussparung der Lagerrolle (21), durch die der Griffarm (17) hindurchragt, sowohl in ihrer Breite als auch in ihrer Höhe größer gestaltet ist als die Außenabmessungen des Griffarmes (17).

14. Verstellvorrichtung nach Anspruch 13,
**dadurch gekennzeichnet, daß**
in der Lagerrolle (21) Federelemente (22, 23) integriert sind, die den Griffarm (17) unter Vorspannung in einer zentralen Führungslage halten.

## Claims

1. Adjusting device for a jacket tube (1) of a steering system of a motor vehicle, with a pivotably mounted clamping lever (4) enabling a longitudinal and vertical displacement of the jacket tube (1) in a released position or blocking such movement in a locked position, and with an actuating device for the manual release or locking of the clamping lever (4), which is provided with a handle assembly (5) accessible from a driver seat position when installed in the vehicle,
**characterised in that**
a guide rail assembly (10) is located on the jacket tube in longitudinal alignment therewith to support an adjusting slide (9) movable by means of the handle assembly (5) and connected to the clamping lever (4).

2. Adjusting device according to claim 1,
**characterised in that**
the guidance of the adjusting slide (9) on the guide rail assembly (10), the pivotable mounting of the clamping lever (4) and a mounting (15) of the handle assembly (5) are so matched with regard to their guidance and bearing friction forces that the guide rail assembly (10) located on the jacket tube can, during a longitudinal adjustment of the jacket tube (1), be displaced relative to the adjusting slide held in a fixed position by the clamping lever (4) and the handle assembly (5).

3. Adjusting device according to claim I or 2,
**characterised in that**
the adjusting slice (9) is connected to the clamping lever (4) by means of a coupling unit (7, 8) balancing the translatory mobility of the adjusting slide (9) against the rotational mobility of the clamping lever (4).

4. Adjusting device according to claim 1,
**characterised in that**
a tolerance balancing unit (6, 11, 12) is integrated into the connection between the adjusting slide (9) and the clamping lever (4) or between the adjusting slide (9) and the handle assembly (5).

5. Adjusting device according to claim 4,
**characterised in that**
the tolerance balancing unit (6, 11, 12) is designed as an adjusting mechanism (26 to 31) provided between the clamping lever (4) and the adjusting slide (9).

6. Adjusting device according to claim 5,
**characterised in that**
the adjusting mechanism (26 to 31) comprises on the one hand an adjusting rod (26) with toothing (27) and on the other hand a slide movable on the adjusting rod (26) and provided with a locking element (28) with corresponding toothing (29), which can be manually transferred into a released position and is acted on by a spring for automatic return to its locked position.

7. Adjusting device according to claim 6,
**characterised in that**
the slide is loaded in one direction of movement by a return spring assembly (12).

8. Adjusting device according to claim 7,
**characterised in that**
the return spring assembly (12) is coaxially located on the adjusting rod (26).

9. Adjusting device according to any of the preceding claims,
**characterised in that**
the handle assembly (5) is movably supported in a jacket tube sleeve (14) by means of a mounting (15) with mounting elements (21 to 25) with enough play to enable the handle assembly (5) to execute balancing movements about at least one axis extending at right angles to the displacement direction.

10. Adjusting device according to claim 9,
**characterised in that**
the handle assembly (5) comprises a handle arm (17) extending in the longitudinal direction and coupled at one end to the adjusting slide (9) while featuring a handle element (13) accessible from the driver seat position at the other end.

11. Adjusting device according to claim 10,
**characterised in that**
the coupling between the handle arm (17) and the adjusting slide (9) is designed as a releasable interlock.

12. Adjusting device according to claim 10,
**characterised in that**
the handle arm (17) radially extends through a central recess of a bearing roller (21) serving as a mounting element and tiltably mounted on a horizontal pivot extending at right angles to the displacement direction of the handle arm (17).

13. Adjusting device according to claim 12,
**characterised in that**
the recess of the bearing roller (21) through which the handle arm (17) extends exceeds the external dimensions of the handle arm (17) both in width and in height.

14. Adjusting device according to claim 13,
**characterised in that**
the bearing roller (21) incorporates integral spring elements (22, 23) holding the handle arm (17) in a central guide position under preload.

## Revendications

1. Dispositif de réglage pour un tube de protection (1) d'une colonne de direction d'un véhicule automobile, avec un levier de blocage (4) monté pivotant, qui, dans une position relâchée, libère une possibilité de réglage en longueur ou en hauteur du tube de protection (1) ou, dans une position de blocage, bloque celle-ci, ainsi qu'avec un dispositif de manoeuvre pour relâcher manuellement ou bloquer manuellement le levier de blocage (4), lequel comporte un système à poignée (5) accessible à partir d'une position du siège conducteur à l'état monté fixe dans le véhicule, **caractérisé en ce que**, contre le tube de protection (1), est disposé un système de rail de guidage (10), qui est orienté dans le sens longitudinal du tube de protection et contre lequel est maintenu de manière mobile un chariot de réglage (9), qui est actionné par le système à poignée (5) et qui est en liaison avec le levier de blocage (4).

2. Dispositif de réglage selon la revendication 1, **caractérisé en ce que** le guidage du chariot de réglage (9) sur le système de rail de guidage (10), le montage pivotant du levier de blocage (4) et un palier (15) du système à poignée (5) sont, quant à leurs forces de guidage et de friction, ajustés les uns aux autres de telle sorte que, au moment d'un réglage selon la longueur du tube de protection (1), le système de rail de guidage (10), fixe contre le tube de protection, est mobile par rapport au chariot de réglage maintenu fixe localement par le levier de blocage (4) et le système à poignée (5).

3. Dispositif de réglage selon la revendication 1 ou 2, **caractérisé en ce que** le chariot de réglage (9) est en relation avec le levier de blocage (4) par l'intermédiaire d'une unité de couplage (7, 8), qui compense la mobilité en translation du chariot de réglage (9) vis-à-vis de la mobilité en rotation du levier de blocage (4).

4. Dispositif de réglage selon la revendication 1, **caractérisé en ce qu'**une unité de compensation des tolérances (6, 11, 12) est intégrée dans la liaison entre le chariot de réglage (9) et le levier de blocage (4) ou le chariot de réglage (9) et le système à poignée (5).

5. Dispositif de réglage selon la revendication 4, **caractérisé en ce que** l'unité de compensation des tolérances (6, 11, 12) est conçue sous forme de mécanisme de réglage (26 à 31) prévue entre le levier de blocage (4) et le chariot de réglage (9).

6. Dispositif de réglage selon la revendication 5, **caractérisé en ce que** le mécanisme de réglage (26 à 31) comporte, d'une part, une tige de réglage (26) munie d'une denture (27) et, d'autre part, un chariot coulissant sur la tige de réglage (26), lequel comporte un organe d'arrêt (28), qui est muni d'une denture (29) correspondante et qui peut être amené manuellement dans une position relâchée et être sollicité par un ressort de telle sorte qu'il reprend automatiquement sa position d'arrêt.

7. Dispositif de réglage selon la revendication 6, **caractérisé en ce que** le chariot est sollicité dans une direction de déplacement par un système de ressort de rappel (12).

8. Dispositif de réglage selon la revendication 7, **caractérisé en ce que** le système de ressort de rappel (12) est agencé coaxialement sur la tige de réglage (26).

9. Dispositif de réglage selon l'une quelconque des revendications précédentes, **caractérisé en ce que** le système à poignée (5) est logé mobile au moyen d'un palier (15) dans une manchette (14) du tube de protection, positionnée fixe contre le véhicule, lequel palier comporte des éléments de palier (21 à 25) soumis à un jeu de telle sorte que le système à poignée (5) peut effectuer des mouvements de compensation autour d'au moins un axe s'étendant transversalement au sens de coulissement.

10. Dispositif de réglage selon la revendication 9, **caractérisé en ce que** le système à poignée (5) comporte un bras de poignée (17) longitudinal, dont une extrémité est couplée au chariot de réglage (9) et dont l'autre extrémité comporte un élément de poignée (13) accessible à partir de la position du siège conducteur.

11. Dispositif de réglage selon la revendication 10, **caractérisé en ce que** le couplage du bras de poignée (17) avec le chariot de réglage (9) est conçu sous forme de verrouillage amovible.

12. Dispositif de réglage selon la revendication 10, **caractérisé en ce que** le bras de poignée (17) est guidé radialement à travers un évidement central d'un rouleau du palier (21) formant un élément de palier, qui est monté basculant autour d'un axe de rotation horizontal, orienté transversalement au sens de coulissement du bras de poignée (17).

13. Dispositif de réglage selon la revendication 12, **caractérisé en ce que** l'évidement du rouleau du palier (21), à travers lequel passe le bras de poignée (17), est réalisé en largeur et en hauteur avec des dimensions supérieures aux dimensions extérieures du bras de poignée (17).

14. Dispositif de réglage selon la revendication 13, **caractérisé en ce que** des éléments de ressort (22, 23) sont intégrés dans le rouleau du palier (21) et maintiennent le bras de poignée (17) sous précontrainte dans une position de guidage centrale.
